# EUROPEAN PATENT SPECIFICATION

(11) **EP 2 159 166 B1**
(45) Date of publication and mention of the grant of the patent: **28.03.2012**
(21) Application number: 09169283.0
(22) Date of filing: 02.09.2009
(51) Int. Cl.: B65D 85/52

(54) **Assembly of a package and plant bulbs arranged therein, and a method for cultivating plant bulbs.**
Zusammenbau einer Verpackung und Pflanzenzwiebeln darin, und Verfahren zum Anbau der Pflanzenzwiebeln
Ensemble d'un conditionnement et bulbes de plante agencés dans celui-ci, et procédé de culture de bulbes de plante

(30) Priority: 02.09.2008 NL 2001946
(43) Date of publication of application: 03.03.2010
(73) Proprietor: Boomkwekerij van der Starre B.V., 2771 NM Boskoop (NL)
(72) Inventor: van der Starre, Huibert, 2742 KV, Waddinxveen (NL)
(74) Representative: Ketelaars, Maarten F.J.M.

(56) References cited:
- US-A1- 2005 150 798
- US-A1- 2005 257 425

## Description

The present invention relates to an assembly, comprising a package with plant bulbs arranged therein according to the preamble of claim 1, and to a method of cultivating plant bulbs.

In the prior art, there are many types of package wherein plant bulbs in baskets, trays and the like are delivered to the consumer.

It is aimed that the consumer removes the plant bulbs from the package and places them in a substrate material such as a flower pot filled with earth, or in the garden, by making an opening therein. This is a rather time-consuming (digging) process, that depends on the plant bulb, as well as on its state of development, that needs to be done in the autumn time, i.e. when the weather may not be very good and the consumer may not feel inclined to work in the garden. Furthermore, it takes a very long time before the intended result is achieved. The plant bulbs, incidentally, only grow in the springtime.

After the plant bulbs have flowered, they must be removed in order to avoid future problems. If the plant bulbs are left in the garden, there is a great risk of soil contamination and the leaves of the bulb may grow in between other plants.

All these actions are toilsome and require some planning. The modern-day person tends to be less inclined to do this and is increasingly inclined towards buying on impulse.

From US 2005//0150798 an assembly is known consisting of two sections comprising thick-walled material, wherein continual openings are formed. These sections can rest upon each other and be joined by the clamping action which results from the plant bulbs being inserted therein. Due to the distance between the package sections as a result of this clamping action and the presence of the plant bulbs, the plant bulbs remain partially free.

Such an assembly is suitable for planting in the earth, wherein it is always necessary that a sufficient quantity of earth is added on all sides. A substrate, such as soil, can be placed on top of as well as underneath the plant bulbs. The package shown there is intended specifically for cut flowers, whilst the present invention relates to plant bulbs still in the process of development.

From US 2005/0257425 an assembly according to the preamble of claim 1 is known.

It is an objective of the present invention to provide an assembly and method for the cultivation of plant bulbs that is considerably simpler and will make the purchase of plant bulbs much more encouraging.

This objective is achieved by providing an assembly with the features described in claim 1.

According to the present invention, the plant bulbs are surrounded on all sides by a substrate. Therefore, they are less susceptible to damage by external conditions. Such conditions include temperature and humidity. If the plant bulbs remain unprotected, and the package is not dug deep into a further substrate material, such as earth from the garden, then there is the risk of the plant bulbs being damaged by night-frost. Since, according to the present invention, the plant bulbs are covered on all sides with a substrate, such a risk is eliminated and it is therefore possible to use this assembly in many different positions; in other words, it is not necessary for it to be fully buried.

Furthermore, this objective is achieved by the features described in the independent method claim.

According to the present invention, the plant bulbs are no longer removed from the package, as is the case in the prior art, but they are placed, along with the package and the substrate present between the plant bulbs and the package, onto a rooting surface or carrier. This may de done in conjunction with any further package assemblies to be described in detail hereinafter.

After placement, for example in the garden or a plant pot or the like, which requires no further preparatory work, the package remains in place; i.e. protruding upwards from the rooting surface.

If the package is placed at the correct time of year, the plant bulbs will develop in the usual manner. Initially and predominantly, rooting will thereby take place and shoots will develop in the top of the bulbs, albeit to a lesser extent. Because the package includes openings, the roots will penetrate through the package and into the carrier or the rooting surface where they will continue to grow. In this manner the package remains stably anchored to the substrate. The plant bulbs will then sprout and leaves and flowers will develop. At that time there is no risk of the package being blown away or tipping over because the plant bulbs are already well established in their growth and firmly rooted into the underlying carrier.

It is possible to provide the base with a foil to cover the holes so as to prevent the escape of the substrate during transport. The consumer needs to remove such foil at first use.

According to a further embodiment of the present invention, such a covering is not present and the openings and the substrate are adapted to each in such a manner that can be no substantial loss of the substrate during the transport of the assembly and the consumer can place the assembly in the soil in the desired place without any further action being required.

According to the present invention, the side wall is closed, i.e. no substrate can escape, thus enabling an (insulating) layer of substrate material to be placed between the bulb and the side walls of the package. In addition, apart from the protective effect against temperature drops as previously mentioned, this encourages the development of the bulb when it is surrounded by a soil substrate on all sides.

It is possible to provide the package with partitions or other forms of compartments in which the plant bulbs can be placed. According to one advantageous embodiment of the invention, such compartmentation is not used and so all kinds of plant bulbs of varying sizes can be received in the package and in any desired density.

According to a further embodiment of the invention, there is a substantial amount of soil on top of the plant bulbs. For example, a layer of 7-10 cm of soil can be placed on top of the bulb. This optimizes the development of the bulb. If the layer is only a few centimeters thick, as in the prior art, this not only impairs the development of the bulb, but more importantly, it increases the risk of temperature and other influences causing damage to the bulb.

After the growing season is over, and the plant bulbs have bloomed, the package can be lifted upwards in order to separate the roots of the plant bulbs from between the package and the carrier. If desired, a knife or other tool can be used to assist in the separation of the roots from between the package and the carrier. The package can then be removed along with the plant bulbs that have already flowered.

In this respect, it should be understood that the necessity of planting the plant bulbs in the autumn and removing them again in the spring is completely eliminated. The consumer only needs to place the package onto a rooting surface or carrier in the autumn, which only entails the placement thereof, and then to remove the package again in the springtime after the plant bulbs have flowered.

This makes it much more attractive for the consumer to purchase the plant bulbs and to place them in the garden or in a pot, or elsewhere.

This attractive method of use can be further enhanced if a number of packages can be used in conjunction with each other in a simple manner. This would result in a series of plant bulbs that have a pleasant appearance in the springtime. For example, the adjacent assemblies can be held firmly in place by using cooperative coupling means. Moreover, such a coupling will improve the stability of the individual packages if, in the autumn, there is a strong wind or such like. Furthermore, it is possible to market differently formed package so that the consumer can produce different types of bulb arrangements, as desired.

As indicated above, it is important that the roots of the plant bulbs can penetrate the bottom of the package and that they can develop in the underlying carrier. To achieve this, it is important that there are sufficient openings and that each of these openings is large enough to allow the roots to penetrate. A foil can be provided over the top of the package, which can then be removed immediately after placing the package in the garden or elsewhere. All these foils can be provided with information regarding the correct use of the package. Such information can also be included on a handle for the package, thus enabling the consumer to carry the package from the shop more easily. This handle is embodied to be removable.

According to the present invention, a cover is used to close off the upper side of package. Furthermore, a carrying handle is used that is attached to the holder and closes off the cover. In other words, the cover can also be removed when the handle is removed. Such handle preferably comprises a handle that can be easily attached and removed and is also strong enough to enable the consumer to carry the assembly. According to one particular embodiment of the present invention, opposing slotted openings are provided in the cover as well as in the holder, in the correct corresponding position for both. The extremities of the handles can be folded over and, when the ends are folded against each other, this can then be passed precisely through the abovementioned slot. The ends are then folded outwards again, thus preventing their removal from the slots in the cover and in the holder. Of course, theoretically, the cover can be reopened by pressing the ends together again, but in practice it is sufficient to simply cut this loose near to where the handle is connected to the package, so that the end moves away and the cover comes loose.

According to one particular embodiment of the invention, the total surface of openings through which rooting takes place constitutes at least half of the total surface area of the base of the holder.

Preferably, the side walls are substantially sealed off. These preferably have a neutral colour (green or brown) so that they do not stand out conspicuously where the tray is to be placed.

In particular, if plant bulbs are to be placed outdoors, and in a place where frost can occur, it is important to protect the plant bulbs from frost damage. This can be achieved quite easily in that after placing the package on the ground, the consumer places a little soil alongside the package. This can also be achieved, or the effect thereof can be enhanced, by placing the plant bulbs in the holder spaced from the side walls so that insulating substrate can be placed between the plant bulbs and the side walls. This spacing can also be imposed beforehand by providing ribs in the side walls to serve as spacers for the plant bulbs.

The package comprises a biodegradable material and, more specifically, a biodegradable plastic material. More specifically, this relates to a plastic material that only decomposes biologically when composted. Examples include plastic materials based on corn starch, compressed rice chaff or other grain chaffs, elephant grass, or based on potato starch.

The plant bulbs are preferably positioned at a relatively short distance from each other inside the package. This makes the problem of any plant bulbs not sprouting less apparent. This also results in a tight row of flowers when the plant bulbs begin to sprout. This spacing is preferably between 0.5 and 3 cm.

The present invention also relates to a combination comprising a number of assemblies as described above, wherein each package is provided with coupling means so that each of said assemblies can be joined to each other.

The invention will now be described in more detail according to an exemplary embodiment shown in the drawing, wherein:
Fig. 1 shows a schematic top view and a perspective view of a package not forming part of the invention;
Fig. 2 shows a top view of the package according to fig. 1;
Fig. 3 shows a cross-sectional detail of the package;
Fig. 4 shows the option of joining a combination of assemblies;
Fig. 5a-d show the placement, development and removal of plant bulbs;
Fig. 6 shows a package according to the invention; and
Fig. 7-9 show the placement of a cover and handle on the holder shown in fig. 6.

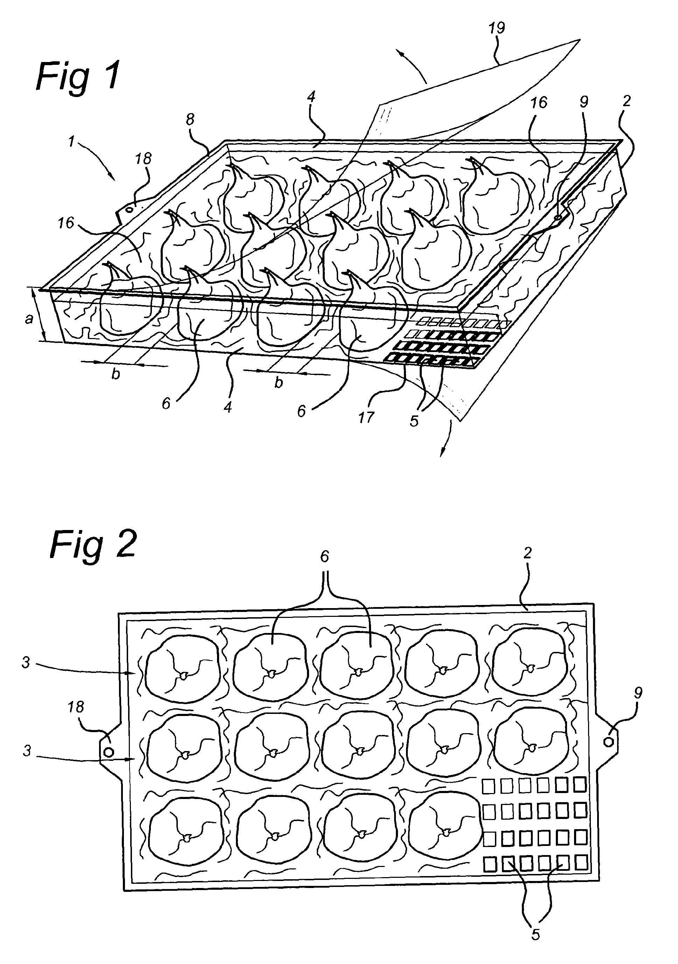

In fig. 1, an assembly is indicated by the numeral 1. This comprises a holder 2 in the form of a tray. This is filled with plant bulbs 6 with substrate material 16 placed in between. The plant bulbs 6 are spaced at a distance b of approximately 1 cm. For the purpose of clarity, no plant bulbs or substrate are drawn on the right-hand side of the package shown in fig. 1. This shows that the bottom 17 of the holder 2 is provided with a large number of openings 5. These openings 5 are always located where the undersides of the plant bulbs are to be placed and, preferably, the cross-sectional area of the free passage is defined by all openings constituting at least and approximately half of the total surface area of the base 17. The height of the holder 2 is indicated by *a*. This is at least the same as the height of a bulb (without shoots) and is, for example, 8-10 cm. The length and width dimensions of the holder 2 can be chosen as desired. As an example, a size of 14 x 28 cm is given, which facilitates stacking on a so-called Danish trolley (*cart used at atictions*). The drawing shows the longitudinal side walls 4 and the transverse side walls 7 and 8. The transverse side wall 7 is provided with a recess 9, whilst the opposite transverse side wall 8 is provided with a corresponding protrusion 18.

As apparent from figure 2, the plant bulbs are arranged in rows 3 within the holder 2. The side walls, in this case side wall 4, can be provided with a rib 10 in order to keep the bulb 6 at a distance from the side wall 4. This results in a considerable quantity of substrate material 3 between the side wall 4 and the bulb 6, which has an increased insulating effect, thus rendering the plant bulbs resistant to any frost before damage occurs.

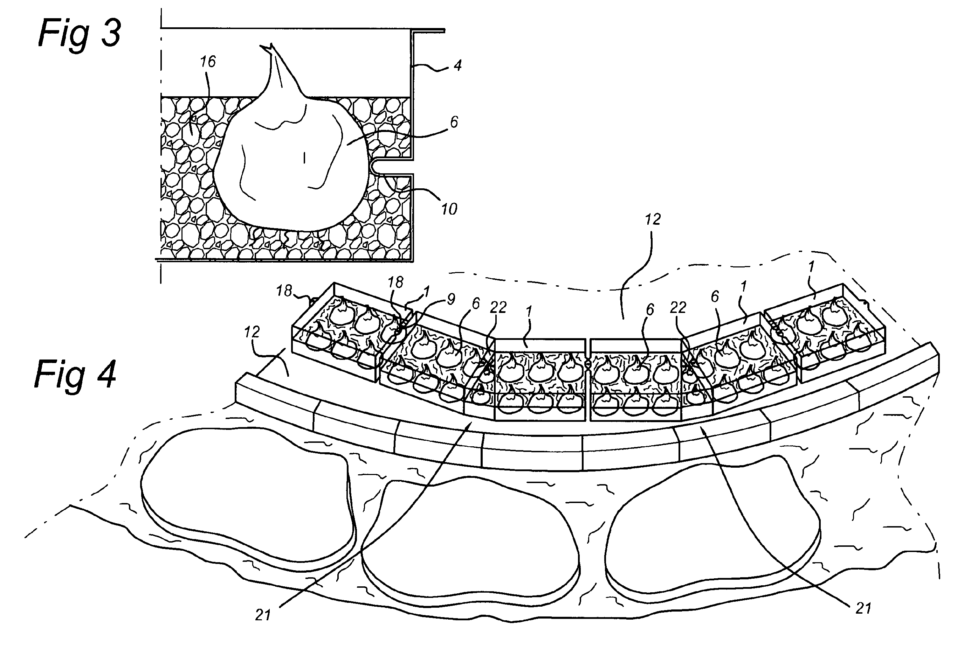

In figure 4, a rooting carrier is shown, such as the surface of a garden or a flower pot or planting tray or similar. Different assemblies 1 are placed thereon, wherein two adjacent packages 1 are joined together by means of the abovementioned protrusions 18 and recesses 9 to form a stable structure. Figure 4 shows an alternative embodiment of the package 21 comprising a triangular holder 22. Plant bulbs 6 are placed inside in the manner as described above. In this manner, all forms of "garland" plant bulb arrangements can be made.

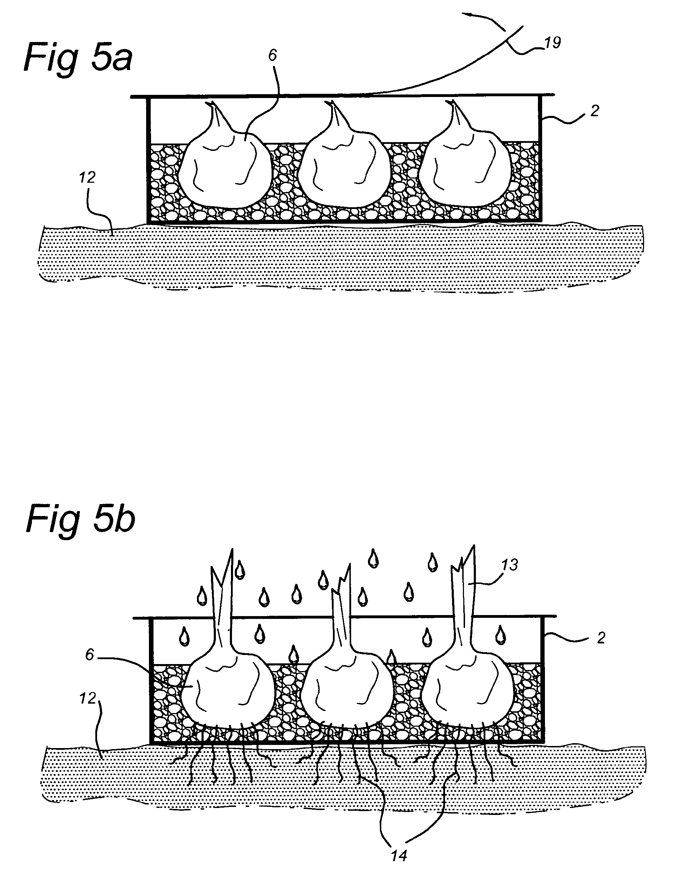

Figure 5a-d show how the package can be used. If desired, the long side walls 4 can also be provided with such protrusions 18 and recesses 9, although rectangular packages, in particular, cannot be positioned transversely to each other or at a different angle to each other.

After purchasing the package 1 or 21, the protective plastic foil 19 can be removed. The underside 17 can also be provided with a protective foil (not shown) that also has to be removed. The same can apply for any handle (not shown) so the package 1 can be easily carried. As is apparent from figure 5a, the package and the plant bulbs 6 and substrate 16 are placed on a rooting surface 12. No further action (apart from watering) is required. The package 1, 21 is placed wherever the flowers are later required.

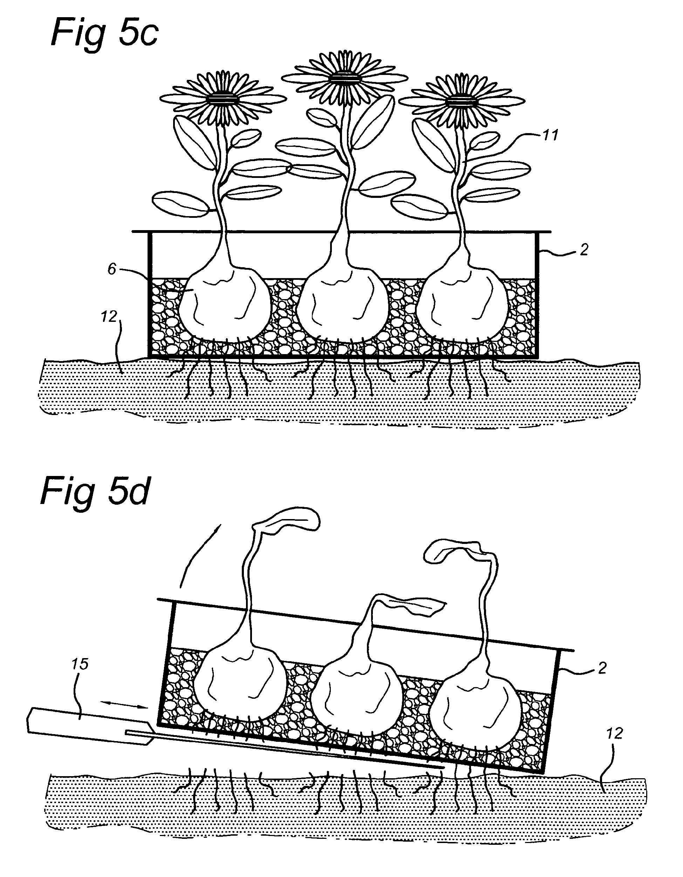

As is apparent in figure 5b, the plant bulbs will subsequently develop in the usual manner. In other words, small shoots 13 will appear and, to a greater extent, the roots 14 will develop. These grow in the substrate 16 as well as through the openings 5. When they grow through the openings 5, they will take root in the rooting carrier 12. This will cause the package to become firmly anchored to the underlying surface 12. Subsequently, as shown in figure 5c, the leaves and flowers 11, that can be affected by the wind, will develop. At that point the package will be firmly anchored in the ground 12 and the stability of the package will be enhanced by the joining together of several other packages 1, 21.

Figure 5d shows the situation wherein the plant bulbs have already flowered. By using a knife 15, or simply by pulling up the package 1, 21 with the plant bulbs 12, this package can be removed and the roots will either come loose or will break off. The package can then be removed along with the flowered plant bulbs.

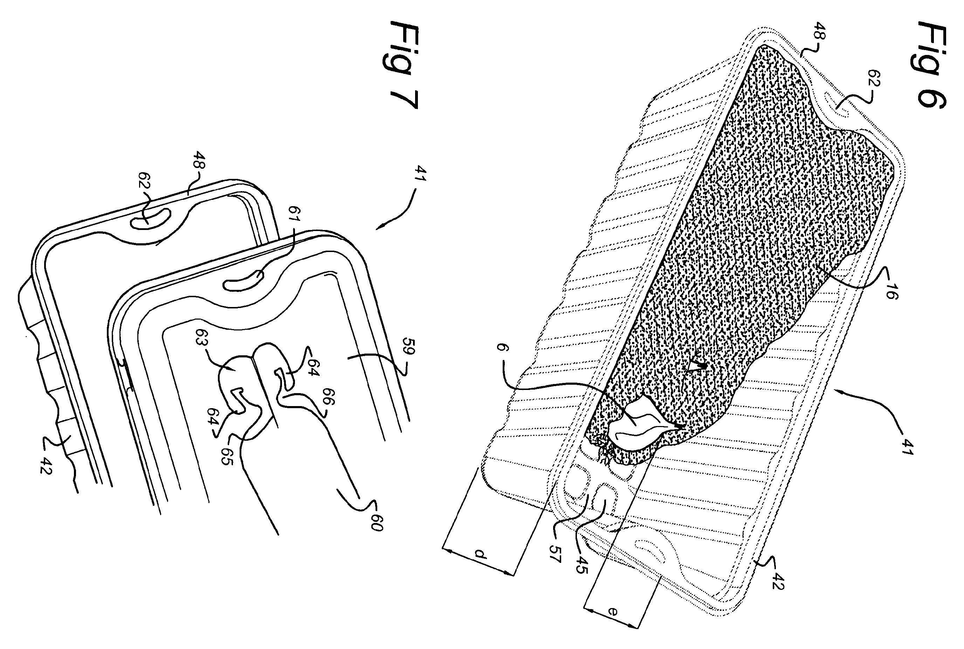

Fig. 6 shows an embodiment of the holder according to the invention. The complete package 41 comprises a holder 42. This holder comprises a base 57 in which openings 45 are provided. In this embodiment, the size of the openings 45 is adapted to the substrate 16 in such a manner that the holder can be transported without spilling and without the need for a protective foil. In other words, during transport the openings 45 remain free. As soon as the holder 42 is placed in its final position as described above, the roots of the plant bulbs 6 will grow through the openings 57.

The side walls of the holder are indicated by 48. These side walls are somewhat higher than in the previously described embodiment. The height thereof is indicated by b. This height lies between 10 and 20 cm. The distance between the upper side of the holder 42 and the top of the bulb is indicated by *e*. In this example, this distance is between 5 and 12 cm, preferably approximately 7 cm. The package material is made of a biodegradable material.

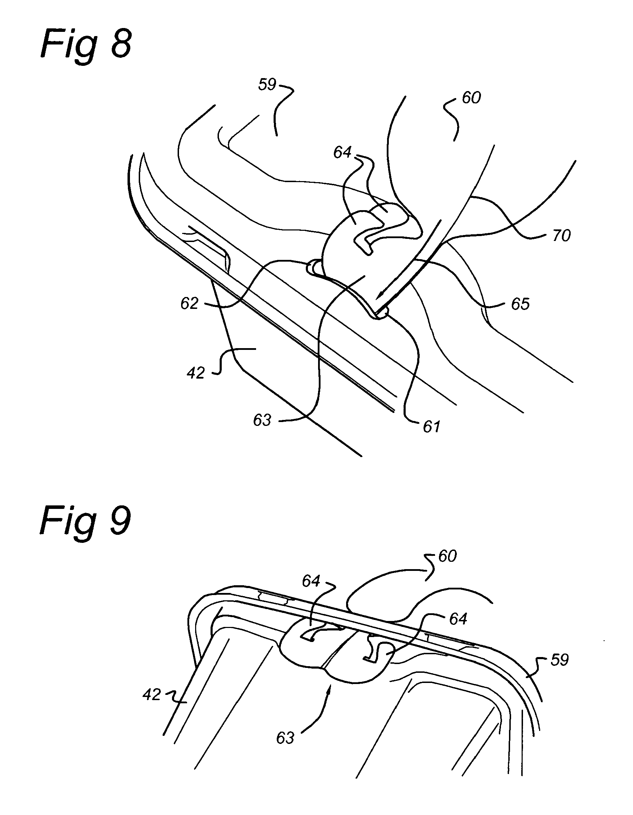

Fig. 7 shows a part of the cover 59 to be placed on the holder. It will be apparent that the cover 59, as well as the holder 42, are provided with slots 61 and 62 respectively. These are curved in shape. Fig. 7 also shows that a handle 60 is provided with an end 63, comprising two end portions 64 that can be folded against each other along the line 70. This is shown in fig. 8. In the position shown in fig. 7, the size of the end 63 is larger than the transverse dimension of the slots 61 and 62.

Fig. 8 shows that, when the cover 59 and the holder 42 are placed in position, the slots 61 and 62 come to rest against each other. By folding the ends 64 up against each other along the line 70, as shown in fig. 8, the end 63 can then be inserted through the slots 61 and 62 in the direction of the arrow 65. After insertion, the narrow portion 66 remains in the slots 61 and 62 and the ends 64 are folded apart again, so that they can no longer pass back through the slots 61 and 62. To remove the handle, it is sufficient to simply cut through the narrow portion 66.

In this manner, the consumer is unable to remove the handle without causing damage. This provides a guarantee against the undesired opening of the package.

All parts of the package can be provided with information.

It will be apparent from the above that the consumer only has to perform two simple actions in order to obtain flowering plant bulbs. The first step is to place the package according to the present invention in the desired position on a rooting surface, and the second step is the removal of the package along with the bulbs that have already flowered.

The considerable advantages in comparison to the prior art are achieved as described above.

After reading the above description, those skilled in the art will be readily aware of various alternative embodiments that lie within the scope of the appended claims.

## Claims

1. Assembly comprising a package (1, 21, 41) for plant bulbs (6) comprising a holder (2, 22, 42) with a base (17, 57) and side walls (8, 48), wherein at least two plant bulbs (6) are accommodated in a row (3), wherein the height (a, d) of the holder (2, 22, 42) corresponds to at least the height of the plant bulbs (6), the holder being filled with a substrate (16) surrounding the plant bulbs and the base (17, 57) of the holder (2, 22, 42) being provided with a number of openings (5, 45), wherein the number and the size of the openings (5, 45) is such that the development of roots is facilitated, wherein a removable cover (19, 59) is provided on said holder (2, 22, 42), wherein the side walls (8, 48) extend substantially above the height of the plant bulbs and in that said substrate (16) is provided continuously over the height of said plant bulbs, **characterised in that** said holder (2, 22, 42) is made of a biodegradable material and **in that** a removable handle (60) is provided, attached to said holder to close off the cover.

2. Assembly according to claim 1, wherein the plant bulbs can be placed freely within the substrate and said openings (5, 45) are adapted in such a manner to the size and other features of the substrate (16) that said substrate is unable to escape through said openings.

3. Assembly according to any of the preceding claims, wherein the total surface area of said openings is at least half of the total surface area of the base of the holder.

4. Assembly according to any of the preceding claims, wherein at least 5 cm of substrate (e) is placed over the top of the bulb.

5. Assembly according to any of the preceding claims, wherein one of said side walls is provided with a rib (10) to keep said plant bulbs (6) spaced from the side wall.

6. Assembly according to any of the preceding claims, wherein the holder is made of a biodegradable plastic material.

7. Assembly according to any of the preceding claims, wherein the spacing (b) between the adjacent plant bulbs (6) is between 0.5 and 3 cm.

8. Combination comprising a number of assemblies (1, 21) according to any of the preceding claims, wherein each of said packages is provided with coupling means (18, 19) to join any other of said packages (21, 1) together.

9. Combination according to claim 10, wherein the external shape of two adjacent packages (1, 21), as viewed from above, varies.

10. Method for the cultivation of plant bulbs (6), comprising the provision of a holder (2, 22) made of biodegradable material according to claim 1 filled with plant bulbs (6) and being closed at the upper side by a cover and provided with a handle (60) that closes off the cover, wherein the holder (2, 22) is filled with substrate (16) over the plant bulbs (6) and the holder (2, 22) is provided with a base (17) with a number of openings through which roots can grow, removing said handle (60) and said cover (59) and the placement of said holder (2, 22) onto a rooting surface (12) and the rooting of said plant bulbs (6) from said holder (2, 22) on said surface, wherein said holder is removed from said rooting surface after cultivation of said plant bulbs.

11. Method according to claim 10, comprising the coupling of a series of holders (2, 22).

12. Method according to claim 10 or 11, wherein said holders (2, 22) are joined to each other.

13. Method according to any of the claims 10-12, wherein said removal comprises cutting and/or digging.

## Patentansprüche

1. Anordnung mit einer Packung (1, 21, 41) für Pflanzenzwiebeln (6) mit einem Halter (2, 22, 42) mit einer Basis (17, 57) und Seitenwänden (8, 48), wobei zumindest zwei Pflanzenzwiebeln (6) in einer Reihe (3) untergebracht sind, wobei die Höhe (a, d) des Halters (2, 22, 42) zumindest der Höhe der Pflanzenzwiebeln (6) entspricht, wobei der Halter mit einem Substrat (16) gefüllt ist, das die Pflanzenzwiebeln und die Basis (17, 57) des Halters (2, 22, 42) umgibt, die mit einer Anzahl an Öffnungen (5, 45) versehen ist, wobei die Anzahl und die Größe der Öffnungen (5, 45) der Art ist, dass die Entwicklung von Wurzeln vereinfacht ist, wobei eine entfernbare Abdeckung (19, 59) an dem Halter (2, 22, 42) vorgesehen ist, wobei die Seitenwände (8, 48) sich im Wesentlichen über die Höhe der Pflanzenzwiebeln erstrecken und das Substrat (16) kontinuierlich über die Höhe der Pflanzenzwiebeln vorgesehen ist, **dadurch gekennzeichnet, dass** der Halter (2, 22, 42) aus einem biologisch abbaubaren Material ist und dass ein entfernbarer Griff (60) vorgesehen ist, der an dem Halter angebracht ist, um die Abdeckung zu verschließen.

2. Anordnung nach Anspruch 1, bei der die Pflanzenzwiebeln frei innerhalb des Substrats platziert werden können und die Öffnungen (5, 45) auf solch eine Weise der Größe und den anderen Merkmalen des Substrats (16) angepasst sind, dass das Substrat durch die Öffnungen nicht entweichen kann.

3. Anordnung nach einem der vorhergehenden Ansprüche, bei der die gesamte Oberflächenfläche der Öffnungen zumindest die Hälfte der gesamten Oberflächenfläche der Basis des Halters ist.

4. Anordnung nach einem der vorhergehenden Ansprüche, bei der zumindest 5 cm des Substrats (e) über dem obersten Teil der Zwiebel platziert sind.

5. Anordnung nach einem der vorhergehenden Ansprüche, bei der eine der Seitenwände mit einer Rippe (10) versehen ist, sodass die Pflanzenzwiebeln (6) von der Seitenwand beabstandet sind.

6. Anordnung nach einem der vorhergehenden Ansprüche, bei welcher der Halter aus einem biologisch abbaubaren Plastikmaterial besteht.

7. Anordnung nach einem der vorhergehenden Ansprüche, bei welcher der Abstand (b) zwischen den benachbarten Pflanzenzwiebeln (6) zwischen 0,5 und 3 cm liegt.

8. Kombination aus einer Anzahl von Anordnungen (1, 21) nach einem der vorhergehenden Ansprüche, bei der jede der Packungen mit Kopplungsmitteln (18, 19) versehen ist, um eine andere der Packungen (21, 1) miteinander zu verbinden.

9. Kombination nach Anspruch 10, bei der die äußere Form zweier benachbarter Packungen (1, 21), von oben betrachtet, variiert.

10. Verfahren zum Anbauen von Pflanzenzwiebeln (6) mit dem Bereitstellen eines Halters (2, 22) aus biologisch abbaubarem Material nach Anspruch 1, der mit Pflanzenzwiebeln (6) gefüllt ist und an der oberen Seite durch eine Abdeckung verschlossen ist und mit einem Griff (60) versehen ist, der die Abdeckung verschließt, wobei der Halter mit Substrat (16) über den Pflanzenzwiebeln (6) gefüllt ist und der Halter (2, 22) mit einer Basis (17) mit einer Anzahl von Öffnungen versehen ist, durch welche Wurzeln wachsen können, Entfernen des Griffs (60) und der Abdeckung (59) und dem Platzieren des Halters (2, 22) auf einer Verwurzelungsoberfläche (12) und das Verwurzeln der Pflanzenzwiebeln (6) von dem Halter (2, 22) auf der Oberfläche, wobei der Halter von der Verwurzelungsoberfläche nach dem Anbau der Pflanzenzwiebeln entfernt wird.

11. Verfahren nach Anspruch 10, mit Koppeln einer Aufeinanderfolge von Haltern (2, 22).

12. Verfahren nach Anspruch 10 oder 11, bei dem die Halter (2, 22) miteinander verbunden sind.

13. Verfahren nach einem der Ansprüche 10 bis 12, bei dem das Entfernen schneiden und/oder ausheben aufweist.

## Revendications

1. Ensemble comprenant un conditionnement (1, 21, 41) pour des bulbes de plante (6) comprenant un support (2, 22, 42) doté d'une base (17, 57) et de parois latérales (8, 48), dans lequel au moins deux bulbes de plante (6) sont reçus dans une rangée (3), dans lequel la hauteur (a, d) du support (2, 22, 42) correspond à au moins la hauteur des bulbes de plante (6), le support étant rempli d'un substrat (16) entourant les bulbes de plante et la base (17, 57) du support (2, 22, 42) étant dotée d'un certain nombre d'ouvertures (5, 45), le nombre et la taille des ouvertures (5, 45) étant tels que le développement des racines soit facilité, dans lequel un couvercle amovible (19, 59) est placé sur ledit support (2, 22, 42), dans lequel les parois latérales (8, 48) s'étendent substantiellement au-dessus de la hauteur des bulbes de plante, et en ce que ledit substrat (16) est fourni en continu sur la hauteur desdits bulbes de plante, **caractérisé en ce que** ledit support (2, 22, 42) est constitué d'un matériau biodégradable et **en ce qu'**une poignée (60) est aménagée, fixée audit support pour fermer le couvercle.

2. Ensemble selon la revendication 1, dans lequel les bulbes de plantes peuvent être placés librement dans le substrat et lesdites ouvertures (5, 45) sont adaptées à la taille et autres caractéristiques du substrat (16) de telle sorte que ledit substrat ne puisse pas s'échapper par lesdites ouvertures.

3. Ensemble selon l'une quelconque des revendications précédentes, dans lequel la surface totale desdites ouvertures est au moins la moitié de la surface totale de la base du support.

4. Ensemble selon l'une quelconque des revendications précédentes, dans lequel au moins 5 cm de substrat (e) sont placés au-dessus du bulbe.

5. Ensemble selon l'une quelconque des revendications précédentes, dans lequel au moins l'une desdites parois latérales est dotée d'une nervure (10) pour garder lesdits bulbes de plante (6) espacés de la paroi latérale.

6. Ensemble selon l'une quelconque des revendications précédentes, dans lequel le support est constitué d'une matière plastique biodégradable.

7. Ensemble selon l'une quelconque des revendications précédentes, dans lequel l'espacement (b) entre les bulbes de plante adjacents (6) se situe entre 0,5 et 3 cm.

8. Combinaison comprenant un certain nombre d'ensembles (1, 21) selon l'une quelconque des revendications précédentes, dans laquelle chacun desdits conditionnements est doté d'un moyen de couplage (18, 19) pour joindre les uns aux autres, un autre desdits conditionnements (21, 1).

9. Combinaison selon la revendication 10, dans lequel la forme externe de deux conditionnements adjacents (1, 21) varie, vue du dessus.

10. Procédé de culture de bulbes de plante (6), comprenant la mise à disposition d'un support (2, 22) constitué d'une matière plastique biodégradable selon la revendication 1, rempli par les bulbes de plante (6) et étant fermé sur le côté supérieur par un couvercle et doté d'une poignée (60) qui ferme le couvercle, dans lequel le support (2, 22) est rempli par le substrat (16) sur les bulbes de plante (6) et le support (2, 22) est doté d'une base (17) comportant un certain nombre d'ouvertures au travers desquelles les racines peuvent pousser, le retrait de ladite poignée (60) et dudit couvercle (59) et le placement dudit support (2, 22) sur une surface d'enracinement (12) et l'enracinement desdits bulbes de plante (6) à partir du support (2, 22) sur ladite surface, dans lequel ledit support est retiré de ladite surface d'enracinement après la culture desdits bulbes de plante.

11. Procédé selon la revendication 10, comprenant le couplage d'une série de supports (2, 22).

12. Procédé selon la revendication 10 ou 11, dans lequel lesdits supports (2, 22) sont joints les uns aux autres.

13. Procédé selon l'une quelconque des revendications 10 à 12, dans lequel ledit retrait comprend la coupe et/ou le déracinement.
